# EUROPEAN PATENT APPLICATION

(11) **EP 4 597 458 A1**
(43) Date of publication of application: **06.08.2025**
(21) Application number: 25155028.1
(22) Date of filing: 30.01.2025
(51) Int. Cl.: G06V 20/59, G06V 40/16, G06V 40/20

(54) **INSPECTION DEVICE, INSPECTION METHOD, AND INSPECTION PROGRAM**

(30) Priority: 01.02.2024 JP 2024014235
(71) Applicant: TOYOTA JIDOSHA KABUSHIKI KAISHA, Aichi-ken, 471-8571 (JP)
(72) Inventor: IIDA, Taiki, TOYOTA-SHI, AICHI-KEN, 471-8571 (JP)
(74) Representative: Cabinet Beau de Loménie

(57) **Abstract**

An inspection device executes an inspection function needed for an inspection of an apparatus of a vehicle 100. The inspection device includes: an authentication unit 331 that determines whether a predetermined authentication condition is satisfied, based on a detection result by a detection device 11,12,13,14 provided in the vehicle; a recognition unit 332 that recognizes a gesture of a passenger of the vehicle which is included in an image captured by an intra-vehicle camera 11 that captures an inside of the vehicle; and an inspection unit 333 that executes the inspection function corresponding to the gesture of the passenger which is recognized by the recognition unit 332 when the authentication unit 331 determines that the authentication condition is satisfied.

## Description

### FIELD

The present disclosure relates to an inspection device, an inspection method, and an inspection program.

### BACKGROUND

Conventionally, it has been known that a gesture of a driver being included in an image in a vehicle captured by a capturing unit that captures the inside of the vehicle is identified, and the image in the vehicle is displayed on a display when the identified gesture coincides with a gesture stored in advance (such as JP 2012-126357A).

An inspection at any timing is needed for an apparatus of a vehicle. Then, in order to reduce a load on an inspection operator, it is conceivable that an inspection function for inspecting such an apparatus of the vehicle starts based on a gesture of a user in the vehicle as described above.

However, when execution of an inspection function starts by a gesture of a passenger of a vehicle and the like, there is a possibility that the passenger may unintentionally perform a gesture for starting execution of the inspection function, and a false operation of executing the inspection function by mistake may occur.

### SUMMARY

In view of the problems described above, an object of the present disclosure is to suppress execution of an inspection function of an apparatus of a vehicle by mistake.

The gist of the present invention is as follows.
(1) An inspection device configured to execute an inspection function needed for an inspection of an apparatus of a vehicle, the inspection device comprising:
   an authentication unit configured to determine whether a predetermined authentication condition is satisfied, based on a detection result by a detection device provided in the vehicle;
   a recognition unit configured to recognize a gesture of a passenger of the vehicle which is included in an image captured by an intra-vehicle camera that captures an inside of the vehicle; and
   an inspection unit configured to execute the inspection function corresponding to the gesture of the passenger which is recognized by the recognition unit when the authentication unit determines that the authentication condition is satisfied.
(2) The inspection device according to above aspect (1), wherein
   the authentication condition does not include a condition related to a gesture of the passenger.
(3) The inspection device according to above aspect (1) or (2), further comprising
   a control unit configured to control a motion of the vehicle other than the inspection function, wherein
   the control unit is configured to control the motion of the vehicle without such control being based on a gesture of a passenger of the vehicle which is included in an image captured by the intra-vehicle camera.
(4) The inspection device according to any one of above aspects (1) to (3), wherein
   the detection device includes a positioning sensor configured to detect a self-position of the vehicle, and
   the authentication condition includes a condition that a self-position detected by the positioning sensor is located in a predetermined designated region.
(5) The inspection device according to any one of above aspects (1) to (4), wherein
   the detection device includes an intra-vehicle camera that captures the inside of the vehicle, and
   the authentication condition includes a condition that a predetermined image is included in an image captured by the intra-vehicle camera.
(6) The inspection device according to any one of above aspects (1) to (5), wherein
   the authentication unit, the recognition unit, and the inspection unit are configured to work even when an ignition switch of the vehicle is OFF.
(7) An inspection method for executing an inspection function needed for an inspection of an apparatus of a vehicle, the inspection method comprising:
   determining whether a predetermined authentication condition is satisfied, based on a detection result by a detection device provided in the vehicle;
   recognizing a gesture of a passenger of the vehicle which is included in an image captured by an intra-vehicle camera that captures an inside of the vehicle; and
   executing the inspection function corresponding to the recognized gesture of the passenger when it is determined that the authentication condition is satisfied.
(8) An inspection program that executes an inspection function needed for an inspection of an apparatus of a vehicle, the inspection program causing a computer to execute:
   determining whether a predetermined authentication condition is satisfied, based on a detection result by a detection device provided in the vehicle;
   recognizing a gesture of a passenger of the vehicle which is included in an image captured by an intra-vehicle camera that captures an inside of the vehicle; and
   executing the inspection function corresponding to the recognized gesture of the passenger when it is determined that the authentication condition is satisfied.

### BRIEF DESCRIPTION OF DRAWINGS

FIG. 1 is a schematic block diagram illustrating a configuration of an inspection system.
FIG. 2 is a schematic side view partially illustrating the inside of a vehicle in which the inspection system is installed.
FIG. 3 is a functional block diagram of a processor of an ECU.
FIGS. 4A and 4B are diagrams illustrating a situation of the vehicle when an optical axis adjustment of an extra-vehicle camera is performed.
FIG. 5 is a flowchart illustrating a flow of authentication processing of determining sufficiency of an authentication condition for executing an inspection function.
FIG. 6 is a flowchart illustrating a flow of inspection processing for executing the inspection function.
FIG. 7 is a schematic side view partially illustrating the inside of the vehicle around an intra-vehicle camera.
FIG. 8 is a schematic side view partially illustrating the inside of the vehicle around the intra-vehicle camera.
FIG. 9 is a flowchart similar to FIG. 5, illustrating a flow of the authentication processing of determining sufficiency of an authentication condition for executing an inspection function.

### DESCRIPTION OF EMBODIMENTS

Hereinafter, embodiments will be described in detail with reference to the drawings. It should be noted that, in the following description, the same reference sign is provided to a similar component.

### First Embodiment

### <Configuration of inspection System>

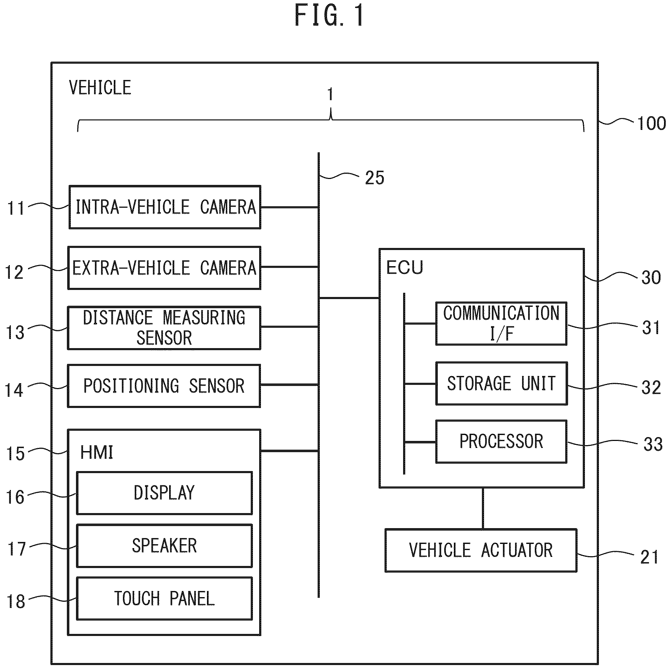

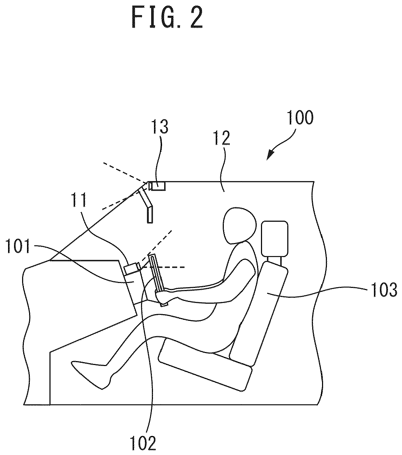

A configuration of an inspection system 1 including an inspection device according to a first embodiment will be described with reference to FIGS. 1 to 3. The inspection device executes an inspection function necessary for an inspection of an apparatus of a vehicle. FIG. 1 is a schematic block diagram illustrating the configuration of the inspection system 1. FIG. 2 is a schematic side view partially illustrating an inside of a vehicle 100 in which the inspection system 1 is installed.

The inspection system 1 is installed in the vehicle 100, and executes the inspection function necessary for the inspection of the apparatus of the vehicle 100. As illustrated in FIG. 2, the vehicle 100 includes a steering wheel 102 attached via a steering column 101, and a driver seat 103 on which a driver sits.

As illustrated in FIG. 1, in the present embodiment, the inspection system 1 includes an intra-vehicle camera 11, an extra-vehicle camera 12, a distance measuring sensor 13, a positioning sensor 14, a human machine interface (HMI) 15, a vehicle actuator 21, and an electronic control unit (hereinafter referred to as an "ECU") 30. The intra-vehicle camera 11, the extra-vehicle camera 12, the distance measuring sensor 13, the positioning sensor 14, the HMI 15, and the ECU 30 are communicably connected to one another via, for example, an in-vehicle network 25. The in-vehicle network 25 is, for example, a network conforming to standards of a controller area network (CAN) or the like. Further, the ECU 30 is connected to the vehicle actuator 21 via a signal line.

The intra-vehicle camera 11 is an apparatus that captures an image of an inside of the vehicle, and is an example of a detecting device provided with the vehicle 100. In the present embodiment, the intra-vehicle camera 11 is disposed to face an upper space of the driver's seat so as so capture an image of a passenger sitting on the driver's seat of the vehicle. In particular, in the present embodiment, the intra-vehicle camera 11 is disposed so as to be able to capture an image of a face of and a part of an upper body of the driver sitting on the driver's seat. The intra-vehicle camera 11 is, for example, provided on an upper part of the steering column 101, as shown in FIG. 2. It should be noted that the intra-vehicle camera 11 may be provided in a position different from the upper portion of the steering column 101 as long as the intra-vehicle camera 11 can capture an image of a passenger in the vehicle 100. For example, the intra-vehicle camera 11 may be provided on the steering wheel 102, a room mirror, a meter panel, a meter hood, ceiling, or the like of the vehicle 100.

The intra-vehicle camera 11 includes a camera and a floodlight. For example, the camera is a complementary metal-oxide semiconductor (CMOS) camera or a charge coupled device (CCD) camera, and the floodlight is a light-emitting diode (LED). Further, the floodlight is preferably a near infrared LED so as to be able to capture an image of a face of a passenger without giving displeasure to the passenger even in low illumination such as nighttime, and the camera is also preferably able to detect near infrared radiation. For example, the floodlight includes two near infrared LEDs disposed on both sides of the camera. Further, the camera may be provided with a filter such as a visible light cut-off filter. The intra-vehicle camera 11 capture an image of a region above the driver's seat of the vehicle 100 at every predetermined capturing interval, and generates an image in which the image of the region is captured. The intra-vehicle camera 11 outputs the generated image to the ECU 30 via the in-vehicle network 25, every time at which the image is generated.

The extra-vehicle camera 12 is an apparatus that captures surroundings of the vehicle, and is an example of a detecting device provided with the vehicle 100. In the present embodiment, the extra-vehicle camera 12 captures an image of the front direction of the vehicle 100. The extra-vehicle camera 12 is, for example, a CMOS camera or a CCD camera having sensitivity to visible light. In the present embodiment, the extra-vehicle camera 12 is attached to, for example, the inside of the vehicle 100 so as to face the front of the vehicle 100. The extra-vehicle camera 12 captures an image of a front region of the vehicle 100 in each predetermined capturing cycle, and generates an image in which the front region is captured. Every time the extra-vehicle camera 12 generates an image, the extra-vehicle camera 12 outputs the generated image to the ECU 30 via the in-vehicle network 25. It should be noted that the extra-vehicle camera 12 may be a monocular camera, or may be a stereo camera. When a stereo camera is used as the extra-vehicle camera 12, the extra-vehicle camera 12 also functions as the distance measuring sensor 13. The vehicle 100 may be provided with a plurality of extra-vehicle cameras having different capturing directions or different focal distances.

The distance measuring sensor 13 is an apparatus that measures a distance to an object present around the vehicle 100, and is one example of a detecting device provided with the vehicle 100. In particular, in the present embodiment, the distance measuring sensor 13 measures a distance to an object present in front of the vehicle 100. In the present embodiment, the distance measuring sensor 13 can also measure an azimuth of an object present around the vehicle 100. The distance measuring sensor 13 is, for example, a radar such as a millimeter wave radar, an LIDAR or an ultrasonic sensor. In the present embodiment, the distance measuring sensor 13 measures a distance to an object present in front of the vehicle. The distance measuring sensor 13 outputs a measurement result of a distance to a surrounding object in each predetermined cycle to the ECU 30 via the in-vehicle network 25.

The positioning sensor 14 is an apparatus that detects a self-position of the vehicle 100, and is one example of a detecting device provided with the vehicle 100. The positioning sensor 14 is, for example, a GNSS receiver. The GNSS receiver receives GNSS signals from a plurality of GNSS satellites, and measures a self-position of the vehicle 100 based on the received GNSS signals. The positioning sensor 14 outputs the self-position information of the vehicle 100 in each predetermined cycle to the ECU 30 via the in-vehicle network 25. It should be noted that the positioning sensor 14 may be a receiver conforming to another satellite positioning system, as long as it is able to measure the self-position of the vehicle 100.

The HMI 15 is an interface for inputting and outputting information between a passenger and the inspection system 1. The HMI 15 includes an information provision device for providing various types of information to a passenger, and an input device for a passenger to perform an input operation.

Specifically, the HMI 15 includes, as the information provision device, a display 16 for displaying character information or image information. The display 16 is one example of a display device that displays an image. The display 16 is a display apparatus in any system such as a liquid crystal display or an organic EL display. The display 16 is disposed so that at least a passenger can check a screen of the display 16. Therefore, the display 16 is disposed on, for example, an instrument panel, a meter panel, or the like of the vehicle 100. The display 16 receives an image signal from the ECU 30 via the in-vehicle network 25, and displays an image according to the image signal. It should be noted that the vehicle 100 may include, as the information provision device, a display apparatus in another system such as a head-up display instead of or in addition to the display 16.

Further, the HMI 15 includes a speaker 17 as the information provision device. The speaker 17 is one example of an apparatus that outputs a sound. The speaker 17 receives a sound signal from the ECU 30 via the in-vehicle network 25, and outputs a sound according to the sound signal. It should be noted that the HMI 15 may include an apparatus that provides various types of information to a passenger other than the display 16 and the speaker 17 (for example, a vibration device or the like).

In addition, the HMI 15 includes a touch panel 18 as an input device. The touch panel 18 is one example of an apparatus on which an input is performed by a touch of a passenger. The touch panel 18 outputs an output signal to the ECU 30 via the in-vehicle network 25 when an operation by a touch of a passenger is performed. It should be noted that the HMI 15 may include, as the input device, an apparatus for a passenger to perform an input operation other than the touch panel 18 (for example, a button, a switch, or the like).

The vehicle actuator 21 is an apparatus used for making the vehicle any type of actions. The vehicle actuator 21 includes an apparatus used for driving the vehicle 100. Specifically, the vehicle actuator 21 includes, for example, a driving actuator that controls an internal combustion engine or an electric motor for driving the vehicle 100, a braking actuator that controls a brake for braking the vehicle 100, and a steering actuator that controls steering of the vehicle 100. The vehicle actuator 21 controls acceleration, braking, and steering of the vehicle 100 according to a control signal transmitted from the ECU 30 via a signal line.

Further, the vehicle actuator 21 includes an apparatus used for actions other than driving of the vehicle 100. Specifically, the vehicle actuator 21 includes an apparatus used for an action other than driving, braking and steering of the vehicle 100 , such as a headlight for illuminating a front of the vehicle 100, a window glass motor for moving upward or downward an window glass of the vehicle 100, a fan or compressor for air-conditioning of the vehicle 100, or the like. It should be noted that the vehicle actuator 21 may include an apparatus used for actions other than the above actions.

### <Configuration of Inspection Device>

The ECU 30 functions as an inspection device that executes the functions necessary for an inspection of the apparatus of the vehicle 100. In the present embodiment, the ECU 30 executes functions necessary for an inspection of the extra-vehicle camera 12 and the distance measuring sensor 13. Further, the ECU 30 controls the vehicle actuator 21. Therefore, the ECU 30 controls driving, breaking and steering of the vehicle 100, tuning on and turning off the headlight, or the like. As illustrated in FIG. 1, the ECU 30 includes a communication interface 31, a storage unit 32, and a processor 33.

The communication interface 31 is a circuit for connecting the ECU 30 to the in-vehicle network 25.

The storage unit 32 stores data. The storage unit 32 includes, for example, at least any one of a volatile semiconductor memory, a non-volatile semiconductor memory, a hard disk drive (HDD), and a solid state drive (SSD). The storage unit 32 stores a computer program executed by the processor 33 of the ECU 30. The storage unit 32 stores data used in a computer program executed by the processor 33, such as data transmitted from the intra-vehicle camera 11.

The processor 33 includes one or a plurality of central processing units (CPUs) and peripheral circuits thereof. The processor 33 may further include another arithmetic circuit such as a logical arithmetic unit or a numerical arithmetic unit. The processor 33 executes a computer program stored in the storage unit 32.

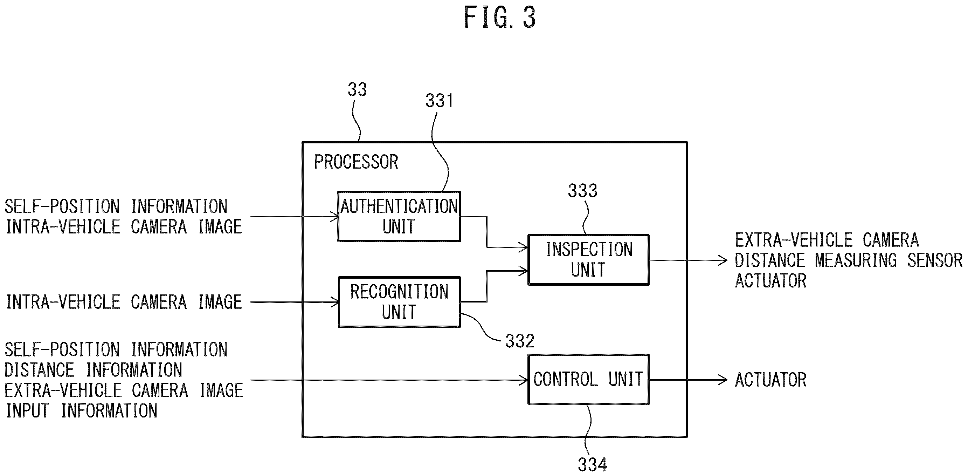

FIG. 3 is a functional block diagram of the processor 33 of the ECU 30. As illustrated in FIG. 3, the processor 33 includes an authentication unit 331, a recognition unit 332, an inspection unit 333, and a control unit 334.

The authentication unit 331 determines whether a predetermined authentication condition is satisfied, based on a detection result by a detection device provided in the vehicle 100. In particular, in the present embodiment, the authentication unit 331 determines whether an authentication condition is satisfied, without using an apparatus outside the vehicle 100 (for example, an inspection PC, and the like). Therefore, an apparatus outside the vehicle 100 is not needed for the authentication condition to be satisfied. In the present embodiment, information about a self-position detected by the positioning sensor 14 is input from the positioning sensor 14 to the authentication unit 331. Then, the authentication unit 331 outputs a determination result of whether the authentication condition is satisfied to the inspection unit 333.

In the present embodiment, the authentication condition in the authentication unit 331 includes a condition that a self-position detected by the positioning sensor 14 is located in a predetermined designated region. In particular, in the present embodiment, the authentication condition is satisfied when a detected self-position is located in the predetermined designated region, and the authentication condition is not satisfied when a detected self-position is not located in the predetermined designated region.

The designated region is preregistered by an owner of the vehicle 100 or a dealer of the vehicle 100. As the designated region, for example, a region where a dealer that performs maintenance of the vehicle 100 is located, a region where a house of an owner of the vehicle 100 is located, and the like are set. Therefore, in a case where the dealer that performs maintenance of the vehicle 100 is registered as the designated region, the authentication unit 331 determines that the authentication condition is satisfied when a self-position detected by the positioning sensor 14 is located in the region where the dealer is located. On the other hand, the authentication unit 331 determines that the authentication condition is not satisfied when a self-position detected by the positioning sensor 14 is located outside the region where the dealer is located, for example, on a road.

The recognition unit 332 recognizes a gesture of a passenger of the vehicle 100 included in an image captured by the intra-vehicle camera 11. In particular, in the present embodiment, the recognition unit 332 recognizes a gesture of a passenger sitting on a driver's seat of the vehicle 100 by executing image processing on image information captured by the intra-vehicle camera 11. The information about the image captured by the intra-vehicle camera 11 is input to the recognition unit 332. Then, when the recognition unit 332 recognizes the gesture of the passenger sitting on the driver's seat of the vehicle 100, the recognition unit 332 outputs information about the recognized gesture to the inspection unit 333.

Specifically, in the present embodiment, first, the recognition unit 332 inputs an image acquired from the intra-vehicle camera 11 to an identifier that identifies a hand and a shape of the hand, and recognizes a position of a hand included in the image and the shape of the hand. As such an identifier, for example, a convolutional neural network (CNN) that outputs a position of a hand and a shape of the hand when an image of a passenger is input is used. However, the recognition unit 332 may detect a position of a hand of a passenger and a shape of the hand by any method different from the method using such an identifier.

In addition, the recognition unit 332 recognizes a gesture of a passenger of the vehicle 100, based on whether a change in a position of a hand or a shape of the hand being recognized on a time-series basis coincides with a preregistered gesture motion. For example, a case where a change from a state of a hand with five closed fingers (a state of so-called "rock") to a state of the hand with five open fingers (a state of so-called "paper") is preregistered as a gesture motion is considered. In this case, when the recognition unit 332 recognizes the state of five open fingers of a hand of a passenger sitting on the driver's seat immediately after the recognition unit 332 recognizes the state of five closed fingers of the hand of the passenger, the recognition unit 332 recognizes that the passenger of the vehicle 100 has performed the same gesture as the preregistered gesture motion.

Specifically, in the present embodiment, the recognition unit 332 inputs a change in a position of a hand and a shape of the hand being recognized on a time-series basis to a gesture recognition identifier. When the input change in the position of the hand and the shape of the hand on the time-series basis coincides with a preregistered gesture motion, such an identifier outputs that a gesture corresponding to the gesture motion has been performed. As such an identifier, for example, a convolutional neural network (CNN) that outputs that a gesture corresponding to a change in a position of a hand or a shape of the hand on a time-series basis has been performed when the change is input is used. However, the recognition unit 332 may detect that a corresponding gesture has been performed by any method different from the method using such an identifier.

It should be noted that, in the present embodiment, the recognition unit 332 is configured to recognize a gesture by a hand of a passenger sitting on the driver's seat. However, the recognition unit 332 may be configured to recognize a gesture of a passenger other than a passenger sitting on the driver's seat, or recognize a gesture by a portion (for example, a head or an upper body) other than a hand of a passenger.

When the authentication unit 331 determines that the authentication condition is satisfied, the inspection unit 333 executes an inspection function corresponding to the gesture of the passenger, which is recognized by the recognition unit 332. A detection result of whether the authentication condition is satisfied is input from the authentication unit 331 to the inspection unit 333, and information about the recognized gesture is input from the recognition unit 332 to the inspection unit 333. Then, the inspection unit 333 outputs, to an apparatus corresponding to the inspection function to be executed, a control signal of the apparatus.

In the present embodiment, a corresponding inspection function is set for each gesture motion performed by a passenger of the vehicle 100. Therefore, when a certain gesture (first gesture) is recognized by the recognition unit 332, an inspection function corresponding to the certain gesture (first inspection function) is executed. Then, when another gesture (second gesture) different from the certain gesture is recognized by the recognition unit 332, an inspection function corresponding to the other gesture (second inspection function different from the first inspection function) is executed. In this way, a passenger of the vehicle 100 can execute the plurality of inspection functions different by gestures.

Further, the inspection function means a function needed for an inspection of the vehicle 100. Therefore, the inspection function includes a function needed to be executed for an apparatus of the vehicle 100 in order to inspect the vehicle 100, such as a function of making preparations for inspecting an apparatus of the vehicle 100 in addition to a function of actually inspecting an apparatus of the vehicle 100.

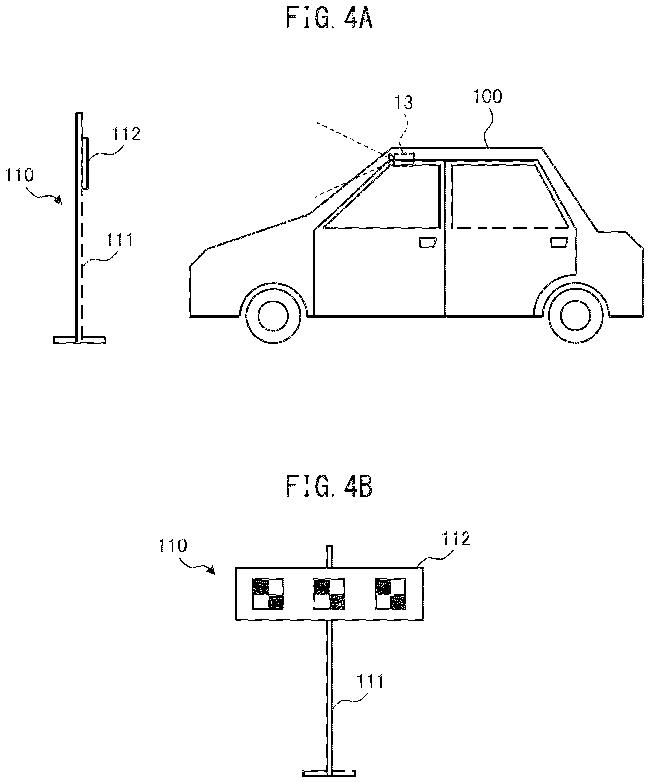

Among the functions, the function of actually inspecting an apparatus of the vehicle 100 includes, for example, an optical axis adjustment function of the extra-vehicle camera 12. An optical axis adjustment of the extra-vehicle camera 12 is a function of adjusting a capturing direction of the extra-vehicle camera 12, for example, when a front camera to which the extra-vehicle camera 12 is attached is exchanged. Hereinafter, the optical axis adjustment function of the extra-vehicle camera 12 will be briefly described with reference to FIGS. 4A and 4B. FIGS. 4A and 4B are diagrams illustrating a situation of the vehicle 100 when an optical axis adjustment of the extra-vehicle camera 12 is performed. In particular, FIG. 4A is a diagram in which the vehicle 100 and a target 110 are viewed from the side when an optical axis adjustment of the extra-vehicle camera 12 is performed, and FIG. 4B is a diagram in which the target 110 is viewed from the front (vehicle side in FIG. 4A).

As illustrated in FIGS. 4A and 4B, when an optical axis adjustment of the extra-vehicle camera 12 is performed, the target 110 is disposed in front of the vehicle 100. As illustrated in FIG. 4B, the target 110 includes a stick-shaped member 111 extending in a vertical direction and a target plate 112 disposed on an upper portion of the stick-shaped member 111. In the example illustrated in FIG. 4B, three predetermined figures aligned in a horizontal direction are drawn on the target plate 112. The target 110 is disposed on a central line extending in a front-rear direction of the vehicle 100 so that a surface of the target plate 112 on which the figures are drawn faces the vehicle 100 side.

Then, as illustrated in FIG. 4A, when the optical axis adjustment function of the extra-vehicle camera 12 is executed in a state where the target 110 is appropriately disposed in front of the vehicle 100, an optical axis of the extra-vehicle camera 12 is automatically adjusted. In this way, a capturing direction of an image by the extra-vehicle camera 12 is appropriately recognized by the ECU 30.

It should be noted that, as an example of the function of actually inspecting an apparatus of the vehicle 100, the function of adjusting an optical axis of the extra-vehicle camera 12 is described. However, the function of actually inspecting an apparatus of the vehicle 100 may include a function of inspecting another apparatus. For example, similarly to an optical axis adjustment of the extra-vehicle camera 12, the function of actually inspecting an apparatus may include a function of performing an optical axis adjustment of the distance measuring sensor 13 (for example, a millimeter wave radar, an LIDAR, and an ultrasonic sensor).

Further, the function needed to be executed for an apparatus of the vehicle 100 in order to inspect the vehicle 100 includes, for example, a function of setting a working state of the vehicle 100 to a test mode. For example, when the vehicle 100 is a hybrid vehicle (HEV) in which an internal combustion engine is mounted, the internal combustion engine is automatically stopped according to a charging state of a battery. Therefore, when an inspection of an ignition timing of the internal combustion engine is performed, a function of automatically stopping the internal combustion engine needs to be released. Thus, the function of automatically stopping the internal combustion engine is released in a test mode for an ignition timing inspection.

Further, in a case where an inspection of a speed meter of the vehicle 100 is performed by using a chassis dynamometer, when traction control works, a tire of the vehicle 100 may not be able to appropriately work. Therefore, when an inspection of the speed meter is performed in the vehicle 100 having the traction control function, the traction control needs to be released. Thus, the traction control is released in a test mode for a speed meter inspection.

It should be noted that, as an example of the function needed to be executed for an apparatus of the vehicle 100 in order to inspect the vehicle 100, the functions of setting a working state of the vehicle 100 to the test mode for an ignition timing inspection and to the test mode for a speed meter inspection are described. However, as an example of the function needed to be executed for an apparatus of the vehicle 100 in order to inspect the vehicle 100, a function of performing another operation of the apparatus of the vehicle 100 may be provided.

In the present embodiment, the inspection unit 333 executes such an inspection function according to a gesture recognized by the recognition unit 332. For example, when a first gesture is recognized by the recognition unit 332, the inspection unit 333 adjusts an optical axis of the extra-vehicle camera 12. Then, when a second gesture different from the first gesture is recognized by the recognition unit 332, the inspection unit 333 sets a working state of the vehicle 100 to the test mode for an ignition timing inspection. Furthermore, when a third gesture different from the first gesture and the second gesture is recognized by the recognition unit 332, the inspection unit 333 sets a working state of the vehicle 100 to the test mode for a speed meter inspection.

The control unit 334 controls a motion of the vehicle 100 other than the inspection function executed by the inspection unit 333. An image captured by the extra-vehicle camera 12, distance information measured by the distance measuring sensor 13, self-position information measured by the positioning sensor 14, and input information input by a passenger in an input device (such as the touch panel 18) of the HMI 15 are input to the control unit 334. Further, the control unit 334 outputs, to an apparatus corresponding to the motion to be executed, a control signal of the apparatus.

In the present embodiment, the control unit 334 controls driving of the vehicle 100. Therefore, for example, when the vehicle 100 is an automatic driving vehicle, the control unit 334 controls the vehicle actuator 21, based on an image input from the extra-vehicle camera 12, distance information input from the distance measuring sensor 13, and self-position information input from the positioning sensor 14. In particular, the control unit 334 controls a driving actuator, a braking actuator, and a steering actuator so that the vehicle 100 travels according to a travel path generated based on input information.

Further, the control unit 334 controls a motion other than driving of the vehicle 100. Therefore, the control unit 334 controls, for example, ON and OFF of a headlight that illuminates the front of the vehicle 100, and opening and closing of window glass of the vehicle 100. Further, the control unit 334 controls a fan and a compressor for air conditioning so that a temperature inside a room of the vehicle 100 is set to a target temperature. In addition, the control unit 334 may control a motion of the vehicle 100 other than the above-described motions.

However, in the present embodiment, the control unit 334 does not use an output of the recognition unit 332. Therefore, the control unit 334 does not perform control of a motion of the vehicle 100, based on a gesture of a passenger which is recognized by the recognition unit 332. In other words, the control unit 334 performs a motion of the vehicle 100, based on a parameter (such as an image captured by the extra-vehicle camera 12) other than a gesture of a passenger which is recognized by the recognition unit 332.

In the inspection device configured as above, when a gesture of a passenger of the vehicle 100 is recognized by the recognition unit 332, an inspection function corresponding to the recognized gesture of the passenger is executed. Thus, according to the inspection device in the present embodiment, an inspection function can be executed without a passenger touching an apparatus of the vehicle 100, and thus a possibility that the vehicle 100 is scratched and stained is reduced.

Further, in a case where the inspection device is configured so as to execute an inspection function corresponding to a gesture regardless of whether an authentication condition is satisfied, for example, when a passenger unintentionally performs the gesture corresponding to the inspection function, there is a possibility that the inspection function may be executed by mistake. In contrast, in the inspection device in the present embodiment, an inspection function corresponding to a gesture is executed when the authentication unit 331 determines that an authentication condition is satisfied. The inspection function corresponding to the gesture is executed only when the authentication condition is satisfied in such a manner, and thus a possibility that the inspection function is executed by mistake can be reduced.

In particular, in the present embodiment, a gesture of a passenger of the vehicle 100 which is recognized by the recognition unit 332 is not used for controlling a motion other than an inspection function of the vehicle 100. In this way, a motion other than the inspection function of the vehicle 100 being performed without an intention of the passenger of the vehicle 100 is suppressed.

Further, in the present embodiment, when a self-position of the vehicle 100 is located in a designated region such as a garage at home and a dealer, an authentication condition is satisfied. Therefore, the authentication condition is satisfied without a passenger performing a special operation, and thus an operation load on the passenger is reduced.

It should be noted that the control unit 334 may use a gesture of a passenger of the vehicle 100 which is recognized by the recognition unit 332 in order to control a motion of the vehicle 100 other than an inspection function. In this case, the control unit 334 may use the gesture of the passenger of the vehicle 100 only when the authentication unit 331 determines that some sort of authentication condition is satisfied.

### <Flow of Inspection Control by Inspection Device>

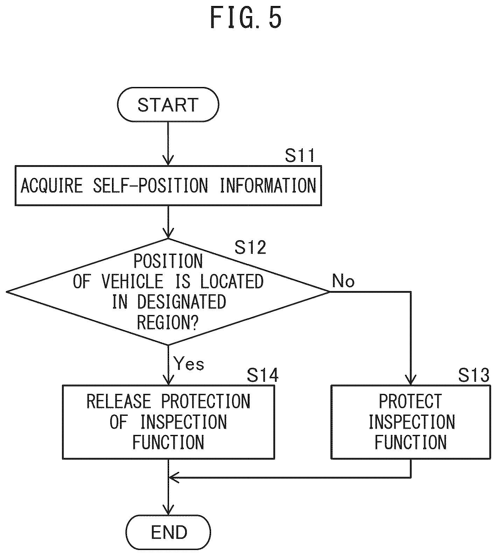

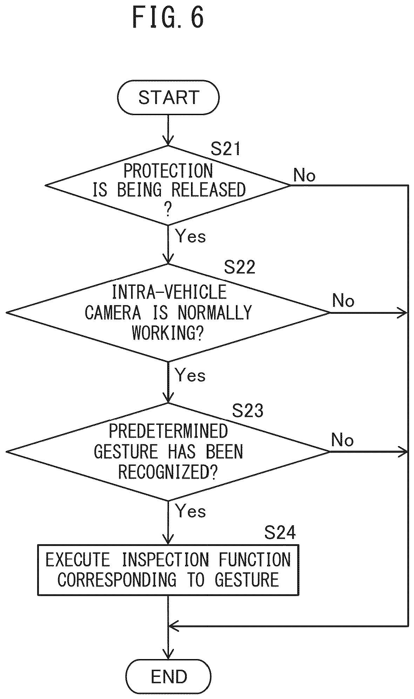

Next, a flow of inspection control by the inspection device will be described with reference to FIGS. 5 and 6. FIG. 5 is a flowchart illustrating a flow of authentication processing of determining sufficiency of an authentication condition for executing an inspection function. The illustrated authentication processing is executed for each fixed time interval by the processor 33 of the ECU 30.

It should be noted that the authentication processing is executed even when an ignition switch of the vehicle 100 is OFF as long as an accessory switch of the vehicle 100 is ON. Therefore, the authentication unit 331 of the processor 33 is configured to work even when the ignition switch of the vehicle 100 is OFF as long as the accessory switch of the vehicle 100 is ON. Here, the accessory switch is a switch in which when the switch is turned ON, a power is not supplied to an apparatus needed for driving and steering of the vehicle 100 while a power is supplied to an apparatus directly unrelated to driving and steering of the vehicle 100 such as the HMI 15. On the other hand, the ignition switch is a switch in which when the switch is turned ON, a power is supplied to not only an apparatus directly unrelated to driving and steering of the vehicle 100 such as the HMI 15 but also an apparatus needed for driving and steering of the vehicle 100.

As illustrated in FIG. 5, when the authentication processing starts, the authentication unit 331 acquires current self-position information measured by the positioning sensor 14 (step S11). The authentication unit 331 may directly acquire self-position information from the positioning sensor 14, or may acquire self-position information stored in the storage unit 32.

Next, the authentication unit 331 determines whether a current position of the vehicle 100 is located in a preregistered designated region, based on the acquired self-position information (step S12). The designated region is preregistered by an owner of the vehicle 100 or a dealer of the vehicle 100, and is stored in the storage unit 32. Therefore, the authentication unit 331 determines whether the current position of the vehicle is located in the designated region stored in the storage unit 32.

When it is determined in step S12 that the position of the vehicle 100 is not located in the designated region, for example, when the vehicle 100 is traveling on a road outside the designated region, the authentication unit 331 protects an inspection function (step S13). Therefore, in this case, protection of the inspection function is not released, and the inspection function is not executed even when a passenger of the vehicle 100 performs any gesture.

On the other hand, when it is determined in step S12 that the position of the vehicle 100 is located in the designated region, for example, when the vehicle 100 is located in a garage at home or a dealer, the authentication unit 331 releases protection of an inspection function (step S14). As a result, the inspection function according to a gesture of the passenger of the vehicle 100 is executed in inspection processing described below.

It should be noted that, when protection of the inspection function is released in step S14 and then the vehicle 100 moves outside the designated region, it is determined in step S12 in next authentication processing that a current position of the vehicle 100 is not located in the preregistered designated region, and, as a result, the inspection function is protected again.

FIG. 6 is a flowchart illustrating a flow of the inspection processing for executing the inspection function. The illustrated inspection processing is executed for each fixed time interval by the processor 33 of the ECU 30. It should be noted that, similarly to the authentication processing, the inspection processing is executed even when the ignition switch of the vehicle 100 is OFF as long as the accessory switch of the vehicle 100 is ON. Therefore, the recognition unit 332 and the inspection unit 333 of the processor 33 are configured to work even when the ignition switch of the vehicle 100 is OFF as long as the accessory switch of the vehicle 100 is ON. Therefore, in the present embodiment, the inspection control can be performed even in a state where the vehicle 100 cannot travel (a state where the ignition switch is OFF).

As illustrated in FIG. 6, when the inspection processing starts, the inspection unit 333 determines whether protection of the inspection function is released (step S21). Specifically, the inspection unit 333 determines that protection of the inspection function is released when protection of the inspection function is released in step S14 of the authentication processing. When it is determined in step S21 that protection of the inspection function is not released, the inspection processing ends without executing the inspection function.

When it is determined in step S21 that protection of the inspection function is released, the recognition unit 332 determines whether the intra-vehicle camera 11 is normally working (step S22). Whether the intra-vehicle camera 11 is normally working is determined by any technique. For example, when the ECU 30 has not received an image signal from the intra-vehicle camera 11, when an image signal has no change for a long period of time, or when the ECU 30 receives an image signal representing an image in which the entire image is in a single color, the recognition unit 332 determines that the intra-vehicle camera 11 is not normal. On the other hand, when the ECU 30 receives an image signal changing with a lapse of time from the intra-vehicle camera 11, the recognition unit 332 determines that the intra-vehicle camera 11 is normal. When it is determined in step S22 that the intra-vehicle camera 11 is not normally working, the inspection processing ends without executing the inspection function.

When it is determined in S22 that the intra-vehicle camera 11 is normally working, the recognition unit 332 determines whether a predetermined gesture has been recognized (step S23). Specifically, the recognition unit 332 determines, based on an image of the intra-vehicle camera 11, whether a change in a position of a hand and a shape of the hand, which is recognized on a time-series basis, coincides with a preregistered gesture motion. When it is determined in step S23 that the recognition unit 332 has not recognized the predetermined gesture, for example, when it is determined that the change in the position of the hand or the shape of the hand, which is recognized on the time-series basis, does not coincide with the preregistered gesture motion, the inspection processing ends without executing the inspection function.

On the other hand, when it is determined in step S23 that the recognition unit 332 has recognized the predetermined gesture, for example, when it is determined that the change in the position of the hand or the shape of the hand, which is recognized on the time-series basis, coincides with the preregistered gesture motion, the inspection unit 333 executes the inspection function corresponding to the recognized gesture (step S24).

### Second Embodiment

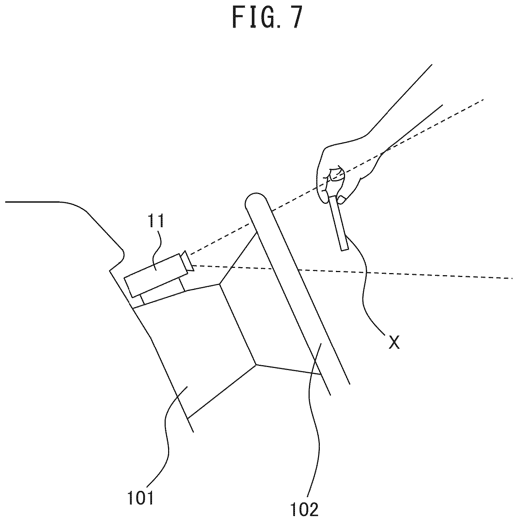

Next, an inspection device according to a second embodiment will be described with reference to FIGS. 7 to 9. A configuration and control of the inspection device according to the second embodiment are basically similar to the configuration and the control of the inspection device according to the first embodiment. Hereinafter, portions different from the inspection device according to the first embodiment will be mainly described.

In the first embodiment described above, the authentication condition in the authentication unit 331 includes a condition that a self-position of the vehicle 100 detected by the positioning sensor 14 is located in a predetermined designated region. However, in the present embodiment, an authentication condition includes a condition related other than a self-position of the vehicle 100, in addition to or instead of a condition related to a self-position of the vehicle 100.

In the present embodiment, an authentication condition in the authentication unit 331 includes a condition that a predetermined authentication image is included in an image captured by the intra-vehicle camera 11. For example, the authentication condition in the authentication unit 331 includes a condition that a preregistered authentication pattern (for example, a two-dimensional bar code) is included in an image captured by the intra-vehicle camera 11. Alternatively, the authentication condition in the authentication unit 331 includes a condition that a preregistered face image of a person is included in an image captured by the intra-vehicle camera 11.

Specifically, the authentication unit 331 inputs an image acquired from the intra-vehicle camera 11 to an identifier that recognizes an authentication pattern, and recognizes the authentication pattern. As such an identifier, a convolutional neural network (CNN) that recognizes an authentication pattern included in an image when the image is input is used. In such an identifier, for example, as illustrated in FIG. 7, when a sheet X on which an authentication pattern is drawn is captured by the intra-vehicle camera 11, the authentication pattern drawn on the sheet X is identified. However, the recognition unit 332 may detect an authentication pattern by any method different from the method using such an identifier.

Next, the authentication unit 331 determines whether the authentication condition is satisfied, based on whether the recognized authentication pattern coincides with a preregistered authentication pattern. When the recognized authentication pattern coincides with the preregistered authentication pattern, the authentication unit 331 determines that the authentication condition is satisfied. On the other hand, when the recognized authentication pattern does not coincide with the preregistered authentication pattern, the authentication unit 331 determines that the authentication condition is not satisfied.

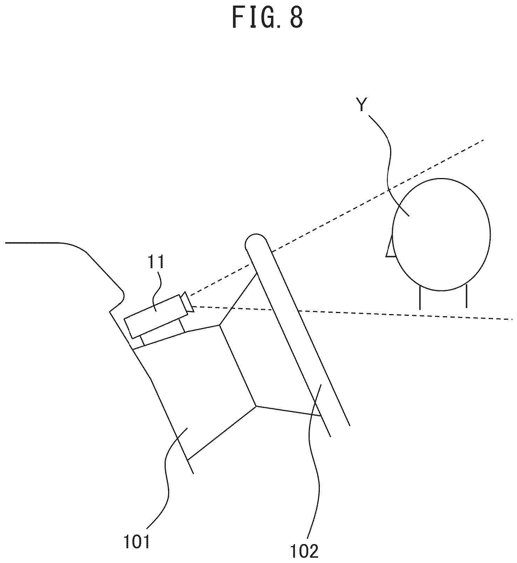

Alternatively, the authentication unit 331 inputs an image acquired from the intra-vehicle camera 11 to an identifier that recognizes a face of a person, and recognizes the face of the person. As such an identifier, a convolutional neural network (CNN) that recognizes a face of a person included in an image when the image is input is used. In such an identifier, for example, as illustrated in FIG. 8, when a face Y of a person is captured by the intra-vehicle camera 11, the face is identified. However, the recognition unit 332 may detect a face of a person by any method different from the method using such an identifier.

Next, the authentication unit 331 determines whether the authentication condition is satisfied, based on whether the recognized face of the person coincides with a preregistered face of a person. When the recognized face of the person coincides with the preregistered face of the person, the authentication unit 331 determines that the authentication condition is satisfied. On the other hand, when the recognized face of the person does not coincide with the preregistered face of the person, the authentication unit 331 determines that the authentication condition is not satisfied.

According to the present embodiment, the authentication condition in the authentication unit 331 does not include a condition related to a self-position of the vehicle 100, and thus an inspection function can be executed even when the vehicle 100 is not located in a designated region.

It should be noted that, in the present embodiment, an image of an authentication pattern or an image of a face of a person is used for performing authentication in the authentication unit 331. However, for example, a predetermined authentication image different from an authentication pattern and a face of a person, such as an image of lines on a palm, may be used.

Further, in the first embodiment and the second embodiment, host vehicle position information about the vehicle 100 and an image acquired from the intra-vehicle camera 11 are used for performing authentication in the authentication unit 331. However, a parameter other than these parameters may be used for performing authentication in the authentication unit 331. For example, input information by an input device of the HMI 15 may be used for performing authentication in the authentication unit 331. In this case, for example, the authentication unit 331 may determine that the authentication condition is satisfied when a special input different from a normal input is performed via the input device of the HMI 15.

However, a gesture recognized by the recognition unit 332 may not be used for authentication in the authentication unit 331. Therefore, in this case, the authentication condition in the authentication unit 331 does not include a condition related to a gesture of a passenger. In this way, authentication being performed by a gesture of a passenger by mistake is suppressed.

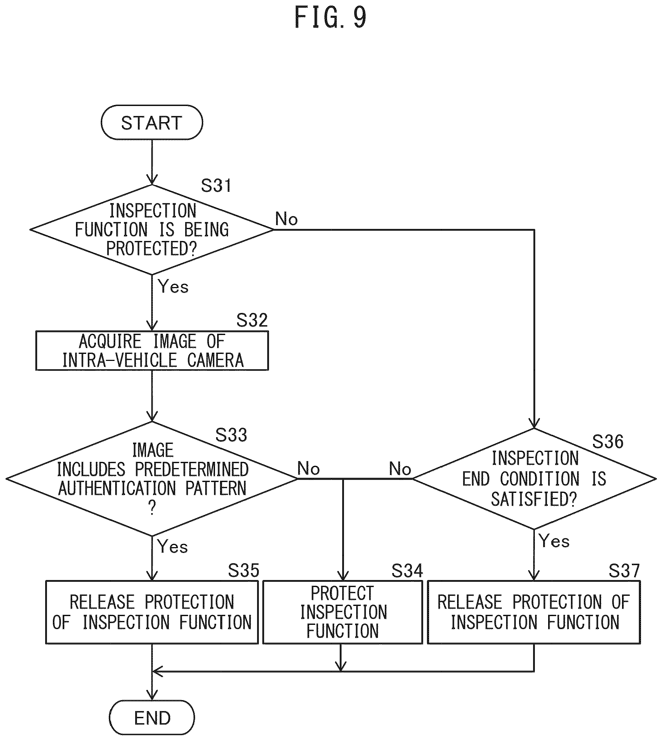

FIG. 9 is a flowchart similar to FIG. 5, illustrating a flow of authentication processing of determining sufficiency of an authentication condition for executing an inspection function. The illustrated authentication processing is executed for each fixed time interval by the processor 33 of the ECU 30.

As illustrated in FIG. 9, when the authentication processing starts, the authentication unit 331 determines whether an inspection function is currently protected (step S31). When it is determined in step S31 that the inspection function is protected (protection of the inspection function is not released), the recognition unit 331 acquires an image of the intra-vehicle camera 11 (step S32). Next, the authentication unit 331 determines whether the image acquired in step S32 includes a predetermined authentication pattern (step S33). When it is determined in step S33 that the image acquired in step S32 does not include the predetermined authentication pattern, the authentication unit 331 protects the inspection function (step S34). Therefore, in this case, protection of the inspection function is not released, and the inspection function is not executed even when a passenger of the vehicle 100 performs any gesture.

On the other hand, when it is determined in step S33 that the image acquired in step S32 includes the predetermined authentication pattern, the authentication unit 331 releases protection of the inspection function (step S35). As a result, the inspection function according to a gesture of the passenger of the vehicle 100 is executed in the inspection processing.

Subsequently, when the authentication processing is executed again, it is determined in step S31 that the inspection function is not protected. In this case, the authentication unit 331 determines whether an end condition of the inspection function is satisfied (step S36). For example, the end condition of the inspection function is satisfied when the recognition unit 332 recognizes that the passenger of the vehicle 100 has performed a gesture corresponding to an end of the inspection function, or when the accessory switch of the vehicle 100 is turned OFF. When it is determined in step S36 that the end condition of the inspection function is not satisfied, protection of the inspection function continues to be released (step S37). On the other hand, when it is determined in step S36 that the end condition of the inspection function is satisfied, the authentication unit 331 protects the inspection function again.

It should be noted that, in the example illustrated in FIG. 9, the authentication condition is satisfied when the predetermined authentication image is included in an image captured by the intra-vehicle camera 11. However, as described above, a condition related to a self-position of the vehicle 100 as in the first embodiment may be added to the authentication condition. In this case, it may be determined that the authentication condition is satisfied when the predetermined authentication image is included in an image captured by the intra-vehicle camera 11 and a self-position of the vehicle 100 is located in a designated region. Alternatively, it may be determined that the authentication condition is satisfied when the predetermined authentication image is included in an image captured by the intra-vehicle camera 11 or a self-position of the vehicle 100 is located in a designated region.

While the suitable embodiments according to the present disclosure have been described, the present disclosure is not limited to these embodiments, and various modifications and changes can be made within the scope of the claims.

## Claims

1. An inspection device configured to execute an inspection function needed for an inspection of an apparatus of a vehicle (100), the inspection device comprising:
an authentication unit (331) configured to determine whether a predetermined authentication condition is satisfied, based on a detection result by a detection device (11, 12, 13, 14) provided in the vehicle (100);
a recognition unit (332) configured to recognize a gesture of a passenger of the vehicle (100) which is included in an image captured by an intra-vehicle camera (11) that captures an inside of the vehicle (100); and
an inspection unit (333) configured to execute the inspection function corresponding to the gesture of the passenger which is recognized by the recognition unit (332) when the authentication unit (331) determines that the authentication condition is satisfied.

2. The inspection device according to claim 1, wherein
the authentication condition does not include a condition related to a gesture of the passenger.

3. The inspection device according to claim 1 or 2, further comprising
a control unit (334) configured to control a motion of the vehicle (100) other than the inspection function, wherein
the control unit (334) is configured to control the motion of the vehicle (100) without such control being based on a gesture of a passenger of the vehicle (100) which is included in an image captured by the intra-vehicle camera (11).

4. The inspection device according to any one of claims 1 to 3, wherein
the detection device (11, 12, 13, 14) includes a positioning sensor (13) configured to detect a self-position of the vehicle (100), and
the authentication condition includes a condition that a self-position detected by the positioning sensor (13) is located in a predetermined designated region.

5. The inspection device according to any one of claims 1 to 4, wherein
the detection device (11, 12, 13, 14) includes an intra-vehicle camera (11) that captures the inside of the vehicle (100), and
the authentication condition includes a condition that a predetermined image is included in an image captured by the intra-vehicle camera (11).

6. The inspection device according to any one of claims 1 to 5, wherein
the authentication unit (331), the recognition unit (332), and the inspection unit (333) are configured to work even when an ignition switch of the vehicle (100) is OFF.

7. An inspection method for executing an inspection function needed for an inspection of an apparatus of a vehicle (100), the inspection method comprising:
determining whether a predetermined authentication condition is satisfied, based on a detection result by a detection device (11, 12, 13, 14) provided in the vehicle (100);
recognizing a gesture of a passenger of the vehicle (100) which is included in an image captured by an intra-vehicle camera (11) that captures an inside of the vehicle (100); and
executing the inspection function corresponding to the recognized gesture of the passenger when it is determined that the authentication condition is satisfied.

8. An inspection program that executes an inspection function needed for an inspection of an apparatus of a vehicle (100), the inspection program causing a computer to execute:
determining whether a predetermined authentication condition is satisfied, based on a detection result by a detection device (11, 12, 13, 14) provided in the vehicle (100);
recognizing a gesture of a passenger of the vehicle (100) which is included in an image captured by an intra-vehicle camera (11) that captures an inside of the vehicle (100); and
executing the inspection function corresponding to the recognized gesture of the passenger when it is determined that the authentication condition is satisfied.
